Europäisches Patentamt

European Patent Office

Office européen des brevets

(19)

(11) Publication number : **0 568 398 A2**

(12) **EUROPEAN PATENT APPLICATION**

(21) Application number : 93303497.7

(22) Date of filing : 04.05.93

(51) Int. Cl.$^5$: **G06K 7/00**, G06K 7/08

(30) Priority : 01.05.92 GB 9209539

(43) Date of publication of application :
03.11.93 Bulletin 93/44

(84) Designated Contracting States :
AT BE CH DE DK ES FR GB GR IE IT LI LU MC
NL PT SE

(71) Applicant : GEC-AVERY LIMITED
Smethwick
Warley, West Midlands B66 2LP (GB)

(72) Inventor : McDonald, Neil Andrew
28 New Road, Armitage
Nr. Rugeley Staffordshire (GB)
Inventor : Jones, Alan
95 Lincoln Avenue, Clayton,
Newcastle-under-Lyme
Staffordshire ST5 3BA (GB)

(74) Representative : Goddin, Jeremy Robert et al
The General Electric Company, p.l.c. GEC
Patent Department Waterhouse Lane
Chelmsford, Essex CM1 2QX (GB)

(54) **Data system and reader unit for reading an inductively powered token.**

(57) A reader unit (10) for reading an inductively powered token, such as a tag, keyfob or credit card, has a reader coil (12) for producing a field to power the token. The amplitude Vcp of the reader coil waveform is sensed by a circuit (16, 17, 18) and regulates the voltage (Vcoil) applied to the reader coil (12) to ensure a constant voltage on the token irrespective of where it is placed in the reader coil field. Regulation is in accordance with the equation

$$vcoil = m(Vcp + c/m)$$

where c and m are constants.

A reference voltage Vref represents the constant value c/m. Resistors (30,31) sum Vcp and c/m which is passed through an operational amplifier (33) having a negative feed back loop with resistors (34,35) to give a gain of m. The working height of the token is extended whilst simultaneously widening the design tolerances of the token which is easier and cheaper to manufacture.

FIG. 3

EP 0 568 398 A2

The invention relates to a reader unit for reading an inductively powered token and also a data system incorporating such reader unit. The inductively powered token can take the form of a tag, a key fob, a credit card, or any other object containing information to be supplied to a reader unit. Such tokens usually comprise a token coil to receive magnetic flux from the reader unit, optionally a tuning capacitor to improve performance, means for rectifing the voltage induced in the token coil, and a voltage regulator to control the rectified voltage applied to the operative circuits of the token.

In an article by Mr. Tom Ivall published in Electronics & Wireless World, pages 577 - 579, the energisation of implanted nerve stimulators by electromagnetic induction is discussed. More particularly, it is stated that such implanted stimulators, and probably inductive links in other applications outside of medicine, should be operationally flexible in tolerating some uncertainty in the working distance between the energy transmission coil and the subcutaneous receiver coil. More particularly it is recognised that variations in the working distance, and therefore coupling coefficient, between the two coils should not affect the amount of electromagnetic energy coupled into the receiver too drastically and reference is made to a "separation-insensitive link" designed by PEK Donaldson and the subject of UK Patent Application No. 8622274. The separation-insensitive link is a combination of self-oscillating series-resonant transmitter and series-resonant receiver, and relies on the energy transferred to the receiver being independent of the mutual induction coupling coefficient, k, over a useful range. This article teaches how a constant voltage can be developed in a subcutaneous tag over a wide range of coupling coefficients, subject to the two coils being overcoupled (coupling coefficient > critical coupling for the system) and that the carrier frequency is allowed to vary. Most data systems utilising inductively powered tokens rely on a stable carrier frequency and it would be undesirable to vary the carrier frequency as the position and orientation of the token varies, because the carrier frequency is also used as the basis of the clock for the token intelligence and memory. Accordingly the proposals in this article would limit the range of operation of an inductive token because of the need to vary the carrier frequency.

US Patent 4797541 teaches how a reader unit can be arranged to provide a precise predetermined amount of power to an inductively powered token, by using a microprocessor and by measuring the performance of the reader coil circuit before the inductively powered token is placed near it. It discloses that a reader/writer unit is operative to power the token and comprises a power delivery system and a power regulator. An oscillator drives a power amplification circuit which drives a primary coil serving as a single reader coil. A variable voltage source is connected to a centre tap of the reader coil and is operable to vary the voltage applied to the reader coil. A current monitor is used to measure the DC current drive that flows through the reader coil. The microprocessor, among other things, is used to control the primary voltage applied by the variable voltage source to the centre tap of the reader coil and also stores in its memory the value of the DC current drive measured by the current monitor. Before the personal data card is inserted into the reader/writer unit, the microprocessor causes the variable voltage source to apply a sequence of stepped voltage levels to the reader coil and stores in its memory the measure of a quiescent DC current drive associated with each of the stepped voltage levels. After the personal data card is inserted into the reader/writer module, the microprocessor causes the variable voltage source to increase the voltage applied to the reader coil in a similar sequence of stepped voltage levels. Thereafter, the current monitor measures the DC current drive through the reader coil and presents this measuremenet, in digital form, to the microprocessor where it is also stored in association with the particular primary voltage that caused it to flow. The microprocessor then calculates a measure of power transmitted from the product of these currents and voltages. For each of the stepped voltages the microprocessor then calcaulates the power difference between the measured power with and without the personal data card inserted. This power difference corresponds to the amount of power actually delivered to the personal data card and, when the power difference exceeds a predetermined threshold, the microprocessor discontinues the stepping process and maintaines the voltage presently applied to the reader coil until the personal data card is removed from the reader/writer unit. After the personal data card is removed, the microprocessor repeats its function and calculates new quiescent values of power.

Thus, US Patent 4797541 discloses that a reader/writer unit, for reading an inductively powered personal data card, should have a single primary coil for producing a field to power the personal data card, a variable voltage regulator operable to vary the voltage applied to the primary coil, and a microprocessor arranged to operate the variable voltage regulator to set the power to be supplied to the personal data card by the primary coil. However this is not achieved in real time because a period of time is necessary to calibrate the reader before the insertion of the personal data card followed by a further period of time to set the correct voltage. Indeed it is necessary for the personal data card to be absent whilst power is measured at various set voltages, and for this process to be repeated whilst the personal data card is present, before the microprocessor can determine the power difference, calculate the power and set the required voltage. To achieve this it would appear essential for the personal data card to be held in a fixed position in the reader/writer unit. This approach is complicated and expensive due to the requirement for a microprocessor and analogue/digital interfaces and also the need to callibrate each reader/writer unit for its correction factor. The concept is to supply a precisely predetermined amount of power to a personal data card inserted into the reader/writer unit and this limits its usefulness to only those personal data cards having that specific power requirement - indeed the insertion of a personal data card having a higher power requirement would result in it being inadequately powered, and one having a lower power requirement would probably be damaged.

It is an object of the present invention to provide a reader unit for reading an inductively powered token, and a data system utilising such reader unit, in which an approximately constant voltage is maintained on the token irrespective of where it is placed within the R.F. field generated by the reader coil. More particularly, this invention is concerned with achieving this objective without any need to alter the carrier frequency and without any need to provide a microprocessor for calculating the currents and subsequently providing the correct amount.

According to one aspect of the present invention a reader unit, for reading an inductively powered token, has the control means provided by a means for sensing the amplitude of the voltage waveform in the reader coil as an indication of the power drawn by the token dependent on its coupling coefficient with the reader coil, and a feedback circuit to control the variable voltage regulator thereby regulating the voltage applied to the reader coil to maintain power transmission to the token approximately constant. In this manner the present invention enables the power supplied to the token coil to be adjusted by analogue means in real time, to maintain constant power in the token whenever it is in the reader coil field. Accordingly, there is no need to measure the power. Instead the present invention fits a linear relationship between the voltage developed on the card to the peak coil voltage on the reader. Furthermore, the present invention enables the token to be moved with respect to the reader coil and also enables the reader unit to provide the correct power to tokens having different power requirements, neither of which can be done utilising the teaching of US Patent 4797541.

In the case where the reader coil forms part of an oscillator, the voltage applied to the oscillator is preferably controlled by the variable voltage regulator.

The feedback circuit preferably includes circuit elements to control the variable voltage regulator at least approximately in accordance with the equation:-

$$Vcoil = mVcp + c$$

where:

Vcoil is the voltage applied to the reader coil,

Vcp is the amplitude of the reader coil waveform, and

m and c are constants.

The circuit elements preferably include means for producing a reference voltage (Vref) to express the ratio of $c/_m$, means for summing the reference voltage and the amplitude of the reader coil waveform (Vcp), and a negative feedback loop arranged to give a gain of (m) to the summation of (Vref) and (Vcp). The means for sensing the amplitude of the voltage waveform is preferably also arranged to detect from the voltage waveform whether a token is inductively coupled with the reader coil.

According to another aspect of the invention a data system comprises a reader unit as taught by the present invention and a plurality of tokens, each token being provided in a known manner with a token coil to receive magnetic flux from the reader coil and means for rectifying the voltage induced in the token coil. Preferably, the tokens are not provided with any means for regulating the rectified voltage, and the rectified voltage is maintained approximately constant by the regulation of the voltage applied to the reader coil.

The present invention enables a constant voltage to be maintained on a token irrespective of where is it placed within the R.F. field generated by the reader coil. The position and orientation of the token coil, relative to the reader coil, affects the coupling coefficient K which is one of the parameters affecting the voltage induced on the token coil. The primary limitation to this concept is the maximum available power supply which will limit the maximum operative spacing between the token coil and the reader coil.

The invention will now be described with, by way of example only, with reference to the accompanying drawings, in which:-

Figure 1 is a circuit diagram of a known data system incorporating a reader unit and a token;

Figure 2 is a graph illustrating the range of guaranteed working height achieved with the arrangement illustrated in Figure 1;

Figure 3 illustrates the circuit of a reader unit in accordance with the present invention, and

Figure 4 is a graph illustrating the increased range of guaranteed working height provided by a reader unit in accordance with the present invention.

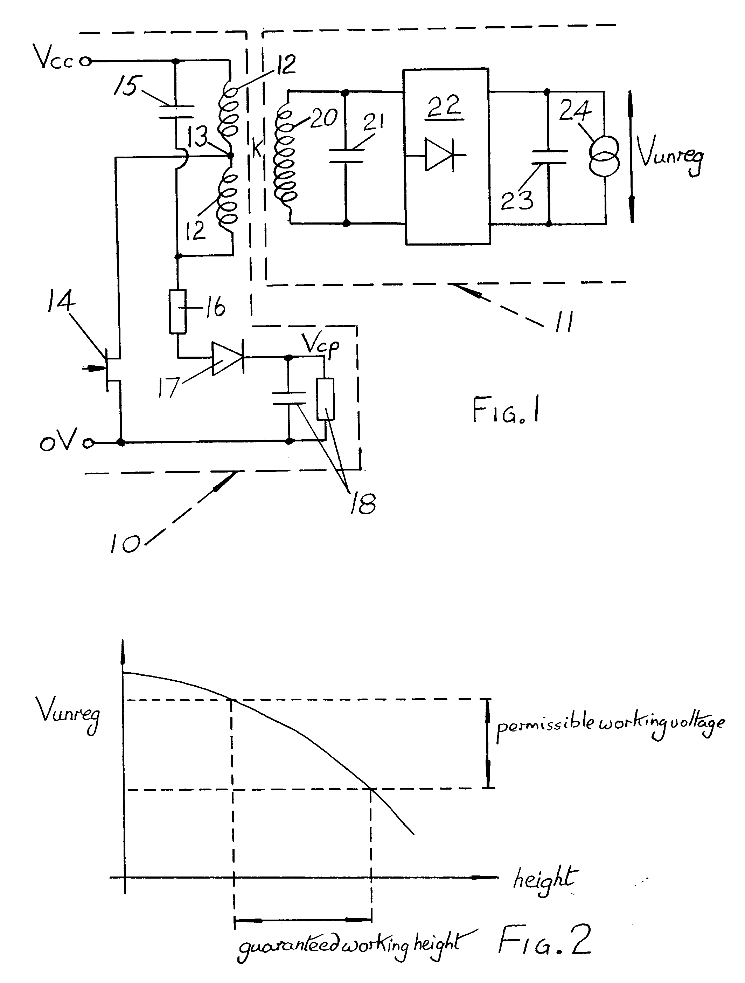

With reference to Figure 1, a reader unit is indicated generally by arrow 10, and an inductively powered token, in the form of a smart card, by arrow 11.

The reader unit 10 has a direct current supply Vcc connected to a reader coil 12 which is tapped at 13 to provide a voltage amplification and is driven by a field effect transistor 14 in known manner. Typically the field effect transistor would be gated by a modulation signal to cause fluctuating currents to oscillate in the reader coil 12. A tuning capacitor 15 may be positioned, as shown, to increase the efficiency of the reader coil 12 in known manner. A voltage signal Vcp is used to detect whenever the token 11 is inductively coupled with the reader coil 12, and is derived from the reader coil 12 through a high impedance resistor 16 which allows the reader coil waveform to be tapped without affecting it. A diode 17 is provided to rectify the reader coil waveform, and a filter 18 is used to smooth the reader coil waveform to provide an indication of the amplitude of the reader coil voltage. Vcp is used purely to detect whether the token 11 is in, or on, the reader unit 10, and typically is arranged to operate a switch, or other decision component, to signal to the reader unit 10 whether or not a token 11 is in position.

The inductively powered token 11 has a token coil 20 for inductive coupling with the reader coil 12 at a coupling coefficient k. Optionally, a tuning capacitor 21 may be arranged in known manner to optimise the efficiency of the token 11. A rectifier circuit 22 is provided to produce an unregulated D.C. output which is applied, across a ripple smoothing capacitor 23, to a constant current regulator 24 of which the output is Vunreg. Any variation in the position between the token coil 20 and the reader coil 12 will alter the value of k and, as the regulator 24 provides a constant load, the value of Vunreg will alter accordingly as illustrated in Figure 2.

From Figure 2, it will be noted that Vunreg will vary with the height of the token coil 20 above the reader coil 12, that is the gap between the coils 12 and 20. For the token to operate satisfactorily, the applied potential must be between the predetermined limits illustrated in Figure 2 which, by extrapolation, determine the height, or effective gap, at which the token is guaranteed to work.

In Figure 3, part of the circuit for the reader unit 10 is identical to that already described with reference to Figure 1 and, accordingly, the same reference numerals have been utilised to indicate equivalant components which will not be described any further.

The circuit illustrated in Figure 3 is designed to take account of the realisation that, if Vunreg is to be held substantially constant, then:-

$$Vcoil = mVcp + c$$

where: m and c are constants

It is therefore possible to maintain Vunreg substantially constant by reading Vcp and applying the above equation to set Vcc. This can best be envisaged by rewriting the above equation as follows:-

$$Vcoil = m(Vcp + c/_m)$$

In the circuit of Figure 3, it will be noted that Vcp is used as an analogue signal feeding back to a resistor 30 which is arranged in parallel to a resistor 31 to which a reference voltage Vref is applied. It is arranged for Vref to represent the constant value of c/m and to be set either from a band gap reference or from Vcc via a potential divider.

The resistors 30 and 31 are chosen to sum Vcp and $c/_m$. An operational amplifier 33 is provided with a negative feed back loop containing resistors 34 and 35 to give a gain of m which, of course, is set by the ratio of the resistors 34 and 35.

The output from the operational amplifier 33 is accordingly a measure of $m(Vcp + c/_m)$ which is otherwise mVcp + c and is applied to a variable voltage regulator 36 thereby modulating Vcoil according to the equation Vcoil = mVcp + c. This equation also could take account of any non-linearty of the variable voltage regulator 36.

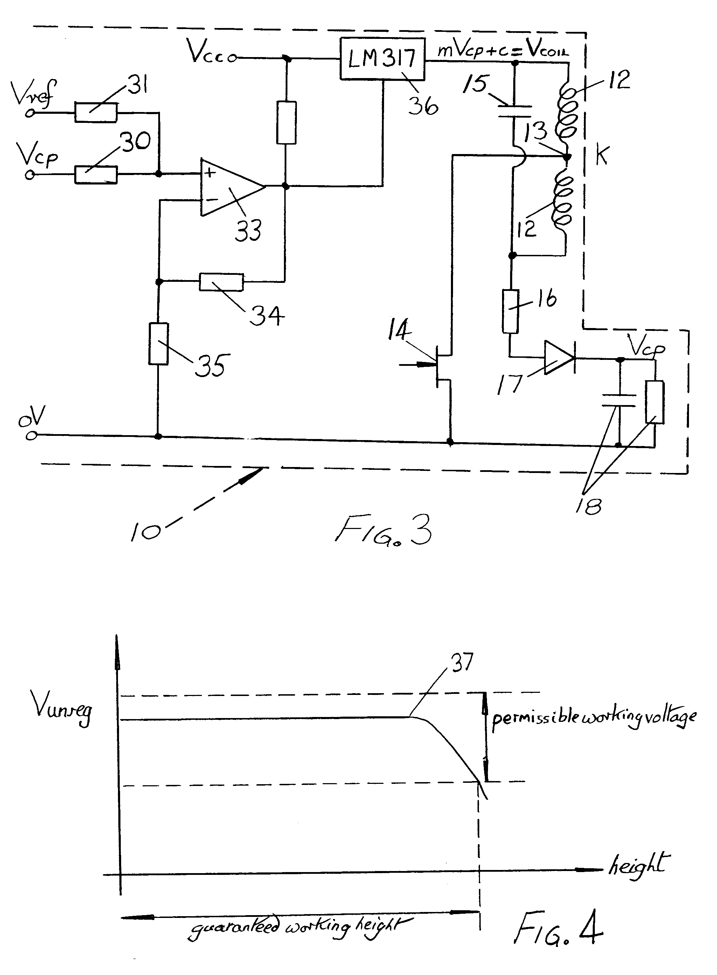

Figure 4 is a typical graph of Vunreg for a token coil 20 inductively coupled to the circuit of Figure 3. It will be noted that Vunreg is constant over a much wider range of working height (that is effective gap) and only starts to fall off at 37 due to the limitations of Vcc.

Because the reader unit 10 taught by Figure 3 effectively maintains a constant voltage within the token 11 irrespective of the working gap between the reader coil 12 and the token coil 20 (within the limitation of the Vcc), the structure of the token 11 can be simplified by omitting any means for regulating the rectified voltage from the rectifier circuit 22.

The invention provides a number of advantages over prior arrangements. Of particular importance, the design tolerances on the card can be widened, therefore making the card easier to manufacture and consequently cheaper. The reason design tolerances could be widened is that inductively powered tokens will only work properly over a predetermined voltage range. The lowest working voltage is set by the technology used for the rest of the circuitry on the token after the rectifier 22 and regulator 24, for instance, if the rest of the circuit requires 5V, then the lowest working voltage might be 6V to guarantee that 5V is always generated by the regulator 24. On the other hand, the highest working voltage is set by the technology, geometry, size and power dissipation requirements, that is the highest permissible working voltage which might typically be 12V. One could possibly use higher working voltages but there would then be a risk of the token being damaged.

Accordingly, each token might have an ideal working range of between 6V to 12V, although it could be different. When one is considering the production of thousands or millions of tokens potentially working on a reader unit, it is necessary to take account of the tolerances in the token circuit design, for instance token coil resistance tolerance, tuning capacitor tolerance, current consumption tolerance, and how the token is manufactured. All of these design parameters affect the voltage generated on a token. For instance, for all tokens placed at the same position and orientation in a field generated by a reader coil, one might see 8.75V + 0.75V, that is a range from 8V to 9.5V. Therefore it would only be possible to guarantee that all tokens would work on a reader unit by stating the positions over which they have voltage range varied from 6.75V to 11.25V for example.

Therefore a "constant voltage" on the token of, say 9V, would allow tolerances in token design to be widened such that the working voltage tolerance was a + 3V; that is without exceeding a maximum voltage of 12V.

Another advantage provided by the present invention is that less power is dissipated in the token which might previously have had to handle up to 12V whereas the maximum it would now encounter would be 9V. There is also less power dissipation in the reader unit because, as the token coil gets closer to the reader coil, the voltage in the reader unit is reduced to stop the voltage rising on the token, thereby reducing the power consumption of the reader unit.

A further advantage is that the height/position range for the token would be extended because its affect on the working voltage is no longer the limiting factor.

Other advantages have been discussed in the specification, but it should be noted that the manufacturing cost of the token can also be reduced by omitting the previously necessary regulator.

## Claims

1. A reader unit, for reading an inductively powered token, having a single reader coil for producing a field to power the token, a variable voltage regulator operable to vary the voltage applied to the reader coil, and control means arranged to operate the variable voltage regulator to set the power to be supplied to the token by the reader coil, characterised in that the control means includes means (16, 17, 18) for sensing the amplitude of the voltage waveform in the reader coil (12) as an indication of the power drawn by the token (11) dependent on its coupling coefficient (K) with the reader coil (12), and a feedback circuit (30, 31, 33, 34, 35) to control the variable voltage regulator (36) thereby regulating the voltage (Vcoil) applied to the reader coil (12) to maintain power transmission to the token (11) approximately constant.

2. A reader unit, as in Claim 1 and in which the reader coil forms part of an oscillator (12, 13, 14, 15) in known manner, characterised in that the voltage applied to the oscillator (12, 13, 14, 15) is controlled by the variable voltage regulator (36).

3. A reader unit, as in Claim 1 or 2, characterised that the feedback circuit (30, 31, 33, 34, 35) includes circuit elements (30, 31, 33, 34, 35) to control the voltage regulator (36) at least approximately in accordance with the equation:-

$$Vcoil = mVcp + c$$

where:

Vcoil is the voltage applied to the reader coil,

Vcp is the amplitude of the reader coil waveform, and

m and c are constants.

4. A reader unit, as in Claim 3, characterised in that the circuit elements (30, 31, 33, 34, 35) include means for producing a reference voltage (Vref) to express the ratio of c/m, means (30, 31) for summing the reference voltage (Vref) and the amplitude of the reader coil waveform (Vcp), and a negative feedback loop (34, 35) arranged to give a gain (m) to the summation of (Vref) and (Vcp).

5. A reader unit, as in any preceding claim, characterised the means (16, 17, 18) for sensing the amplitude of the voltage waveform is also arranged to detect from the voltage waveform whether a token (11) is inductively coupled with the reader coil (12).

6. A data system characterised in that it comprises a reader unit (10) as in any preceding claim and a plurality of tokens (11), each token (11) being provided in known manner with a token coil (20) to receive magnetic flux from the reader coil (12) and means (22) for rectifying the voltage induced in the token coil (20).

7. A data system, as in Claim 6 and in which the tokens (11) are not provided with any means for regulating the rectified voltage, characterised in that the rectified voltage is maintained approximately constant by the regulation of the voltage applied to the reader coil (12).

FIG. 1

FIG. 2

Fig. 3

Fig. 4